# EUROPÄISCHE PATENTSCHRIFT

(11) **EP 1 934 297 B1**
(45) Veröffentlichungstag und Bekanntmachung des Hinweises auf die Patenterteilung: **17.10.2012**
(21) Anmeldenummer: 05788549.3
(22) Anmeldetag: 13.09.2005
(51) Int. Cl.: C09J 5/00, B29C 65/54, B31F 5/04, B65B 7/02, B65B 51/02

(54) **VERFAHREN UND VORRICHTUNG ZUM VERBINDEN ZWEIER FLEXIBLER MATERIALLAGEN**
METHOD AND DEVICE FOR CONNECTING TWO FLEXIBLE MATERIAL LAYERS
PROCEDE ET DISPOSITIF POUR RELIER DEUX COUCHES DE MATERIAU FLEXIBLES

(43) Veröffentlichungstag der Anmeldung: 25.06.2008
(73) Patentinhaber: Mondi AG, 1032 Wien (AT)
(72) Erfinder: WICHMANN, Hans-Joachim, 48324 Sendenhorst (DE)
(74) Vertreter: Lins, Edgar
(86) Internationale Anmeldenummer: PCT/DE2005/001617
(87) Internationale Veröffentlichungsnummer: WO 2007/031042

(56) Entgegenhaltungen:
- EP-A- 0 253 318
- DE-A1- 1 704 247
- DE-A1- 3 722 982
- US-A- 3 475 249
- US-A- 3 993 523
- PATENT ABSTRACTS OF JAPAN Bd. 010, Nr. 242 (M-509), 21. August 1986 (1986-08-21) -& JP 61 074825 A (AGENCY OF IND SCIENCE & TECHNOL), 17. April 1986 (1986-04-17)
- PATENT ABSTRACTS OF JAPAN Bd. 013, Nr. 418 (M-871), 18. September 1989 (1989-09-18) -& JP 01 156280 A (FUJITSU LTD), 19. Juni 1989 (1989-06-19)

## Beschreibung

Die Erfindung betrifft ein Verfahren zur Herstellung eines Erzeugnisses mit wenigstens zwei flexiblen Materiallagen, die mittels einer auf zueinander zeigenden Innenflächen der Materiallagen aufgebrachten Klebstoffschicht miteinander verbunden werden, wobei die Materiallagen gegeneinander gedrückt und dann diskontinuierlich perforiert werden, wobei beim Drücken der Materiallagen gegeneinander eine abgeschlossenen Kammer gebildet wird und wobei gleichzeitig mit dem Perforieren Klebstoff von wenigstens einer Außenseite der Materiallagen in die gebildeten Perforationslöcher gepresst und dabei der Klebstoff in den Zwischenraum zwischen den Materiallogen geleitet wird.

Die Erfindung betrifft ferner eine Vorrichtung zum Verbinden zwei flexibler Materiallagen mittels einer auf zueinander zeigenden Innenflächen der Materiallagen aufgebrachten Klebstoffschicht, mit einem ersten Formteil und einem zweiten Formteil zum Andrücken der Materiallagen aneinander, die relativ zueinander bewegbar sind und im geschlossenen Zustand eine abgeschlossene Kammer bilden, mit einer Nadelanordnung in einem der Formteile zum Durchstoßen der Materiallagen und mit einer Düsenanordnung zum Eindrücken von Klebstoff in die durchstoßenen Bereiche der Materiallagen zum Einleiten von Klebstoff in den Zwischenraum zwischen den Materiallagen.

Die Verbindung zweier flexibler Materiallagen wird häufig benötigt, um Verpackungen, insbesondere Sackverpackungen zu verschließen, wenn die Befüllung durch eine Einfüllöffnung abgeschlossen ist. Die Einfüllöffnung kann sich dabei über den gesamten Sackquerschnitt erstrecken (oben offener Sack), eine Öffnung In einer Sackkante gebildet oder ein Ventil in einem Sackboden darstellen. Die zu verbindenden Materialien können dabei Papierlagen untereinander, Kartonlagen, Papier und Folien, Folien untereinander, Gewebelagen und Kunststoffgewebelagen mit einem der anderen Materialien sein.

Es sind zahlreiche Verfahren bekannt, einen dichten Verschluss von aneinander anliegenden Materiallagen herzustellen. Für Ventilsäcke ist es bekannt, auf die Innenlage des Ventils eine im kalten Zustand nicht klebende Klebstoffschicht aufzubringen und die Verklebung durch Anwendung von Wärme zu aktivieren. Problematisch ist dabei, dass die Klebstoffschicht durch erhöhte Umgebungstemperaturen ungewollt aktiviert werden kann und dass das Füllgut über die Klebstoffschicht transportiert wird und diese verunreinigen kann, sodass die Klebung nicht mehr fehlerfrei möglich ist.

Der Verschluss von Außenventilen, Innenventilen und Stummelventilen ist auch mit einer Ultraschallschweißung vorgenommen worden. Dieses Verfahren setzt allerdings eine entsprechende Ausbildung der inneren Ventillage mit einem verschweißbaren Material voraus.

Insbesondere bei Ventilsäcken, aber auch bei anderen Anwendungen besteht das Problem, dass ein Klebstoffauftrag, beispielsweise nach der Befüllung eines Sackes problematisch ist, wenn die Verklebung an den Innenwandungen der Materiallagen erreicht werden müssen. Es sind daher aufwändige Vorrichtungen erdacht worden, um einen Klebstoffauftrag, beispielsweise in einem Sackventil nach der Befüllung des Sackes, auf derartigen Innenwandungen vornehmen zu können. Eine mit einem vertretbaren Aufwand zu realisierende, gut funktionierende Lösung ist dabei nicht bekannt geworden.

US 3, 475,249 offenbart eine Herstellung eines Schreibsatzes aus mehreren Papierblättern mit zwischen gelegten Kohlenstoff-Durchschreibblättern. Die Verbindung der in geeigneter Weise zueinander ausgerichteten Bahnen der einzelnen Blätter erfolgt über einen gelochten Seitenstreifen, mit dem die Papierbahnen bzw. -blätter als Durchschreibsatz durch einen Drucker transportierbar sind. Zur Verbindung der Blätter des Blattstapels werden die (abtrennbaren) seitlichen Streifen der übereinander gestapelten Blätter durch zwei rotierende Scheiben transportiert, von denen ein auf ihrem Umfang konische Spitzen aufweist, die in entsprechende Buchsenabschnitte auf dem Umfang der anderen Scheibe hineinragen, wenn die Scheiben synchron gedreht werden. Der Buchsenabschnitt ist in der betreffenden Scheibe federnd gelagert und um ein geringeres Maß radial nach innen verschiebbar. Diese Verschiebung wird durch umlaufende Schultern der konischen Spitzen auf der anderen Scheibe gesteuert. Eine Ventilanordnung in der mit den Buchsen versehenen Scheibe sorgt dafür, dass bei jeder Verschiebung der Buchsen eine vorbestimmte Menge Klebstoff in das Innere der Buchse eingeleitet wird. Im Betrieb laufen die zu verbindenden Bahnen aus Papier und Durchschreiblagen zwischen den beiden Scheiben hindurch, sodass die konischen Spitzen die mehreren Lagen des Stapels durchstoßen und in die jeweils zugehörige Buchse drücken. Dadurch wird der in der Buchse vorhandene Klebstoff von der Außenseite der oberen Lage zwischen die durch die Spitze aufgestoßenen Ränder der Lagen gedrückt, sodass Klebstoff auch in die Zwischenräume zwischen den Lagen gelangt. Ein Teil des Klebstoffs verbleibt auf der buchsenseitigen Au-βenseite der Papierlagen und bildet eine vorstehende Klebstoffansammlung. Diese wird durch eine nachfolgende Ambossscheibenanordnung in das Material der Papierlagen hineingedrückt, sodass sicher gestellt ist, dass keine über die Oberseite des Plätterstapels hinausragende Klebstoffansammlung verbleibt. Mit einem derartigen Verfahren und einer derartigen Anordnung können die Papierblätter des Stapels miteinander verbunden werden, eine hohe Stabilität der Klebverbindung ist jedoch nicht erreichbar.

Der Erfindung liegt daher die Aufgabe zugrunde, die Verbindung zweier flexibler Materiallagen in einer einfachen und stabilen Weise zu ermöglichen.

Zur Lösung dieser Aufgabe ist erfindungsgemäß ein Verfahren der eingangs erwähnten Art dadurch gekennzeichnet, dass die abgeschlossene Kammer um die Materiallagen herum gebildet wird und dass die Kammer sowohl zwischen den Materiallagen als auch außerhalb der Materiallagen durch eine Hohlnadel mit einem seitlichen Auslass oder eine seitlich geschlitzte Nadel mit dem Klebstoff gefüllt wird.

Zur Lösung der genannten Aufgabe ist ferner eine Vorrichtung der eingangs erwähnten Art dadurch gekennzeichnet, dass die durch die Formteile gebildete abgeschlossene Kammer durch die Materiallagen gequert wird, dass die Nadelanordnung durch Hohlnadeln mit einem seitlichen Auslass oder durch seitlich geschlitzte Nadeln gebildet ist und dass über die Nadelanordnung die Kammer auch außerhalb der beiden Materiallagen mit Klebstoff füllbar ist.

Die vorliegende Erfindung ermöglicht die Verbindung der flexiblen Materiallagen durch eine die Innenflächen verbindende Klebstoffschicht von der Außenseite der Materiallagen aus, indem die noch klebstofffreien Materiallagen von ihren Außenseiten aus gegeneinander gedrückt und dabei diskontinuierlich durchstoßen werden, wobei Klebstoff in die durchstoßenen Bereiche eingepresst wird, sodass er auch auf die zueinander zeigenden Innenflächen der Materiallagen gelangt. Die Formgebung des Werkzeugs erfolgt dabei so, dass vorzugsweise eine zusammenhängende Klebstoffschicht, insbesondere in Form einer Klebstoffnaht erzeugt wird. Hierfür ist ein geeigneter Abstand der Perforationen voneinander zu wählen.

Durch die Einbringung des Klebstoffs von der Außenseite über die Perforationslöcher entfällt das Problem des Aufbringens des Klebstoffs auf den Innenflächen der Materiallage. Ferner entfallen die Handhabungsnachteile, die beispielsweise durch das Aufbringen der Klebstofflage und einer anschließenden Befüllung eines mit der Klebstofflage versehenen Sackes entstehen. Die erfindungsgemäße Verbindung der Materiallagen miteinander kann unproblematisch nach der Befüllung eines Sackes erfolgen da die Verklebung und Handhabung der Materiallagen von der Außenseite der Materiallagen aus vorgenommen wird.

In einer bevorzugten Ausführungsform des erfindungsgemäßen Verfahrens erfolgt die punktförmige Perforation mittels Hohlnadeln mit einem seitlichen Auslass, wobei der eingepresste Klebstoff durch die Hohlnadeln in den Zwischenraum zwischen den Materiallagen geleitet wird. Bevorzugt ist dabei die Verwendung von seitlich geschlitzten Nadeln.

Es ist besonders zweckmäßig, wenn die Materiallagen durch Formteile gegeneinander gedrückt werden, die im Bereich der Perforation einen abgeschlossenen Raum um die Materiallagen herum bilden, der auch den Zwischenraum zwischen den Materiallagen begrenzt und mit dem Klebstoff gefüllt wird. Es entsteht dabei eine Klebstoffschicht, die sich auf den Innenflächen der Materiallagen befindet, sich durch die Perforationsöffnungen aber auch auf die Außenseite erstreckt und dort eine definierte Klebstoffschicht bzw. Klebstoffnaht ausbildet.

Der Andruck der Materiallagen erfolgt somit vorzugsweise mittels wenigstens zweier Formteile, die relativ zueinander bewegbar sind.

Dabei können die Formteile in der Länge wenigstens der aufzubringenden Klebstoffschicht ausgebildet sein und senkrecht zu den Materiallagen gegeneinander bewegbar sein. Alternativ hierzu können die Formteile an rotierenden Werkzeugen ausgebildet sein, zwischen denen die Materiallagen hindurchgeführt werden. Dies ist insbesondere beim Herstellen und Verschließen von Flachsäcken und Seitenfaltensäcken vorteilhaft.

Die Erfindung soll im Folgenden anhand eines in der Zeichnung dargestellten Ausführungsbeispiels näher erläutert werden. Es zeigen:
- Figur 1: zwei relativ zueinander bewegbare Formteile zur Durchführung des erfindungsgemäßen Verfahrens im geöffneten Zustand;
- Figur 2: die Formteile gemäß Figur 1 im geschlossenen Zustand mit zwischen ihnen abgedichtet eingeklemmten Materiallagen.

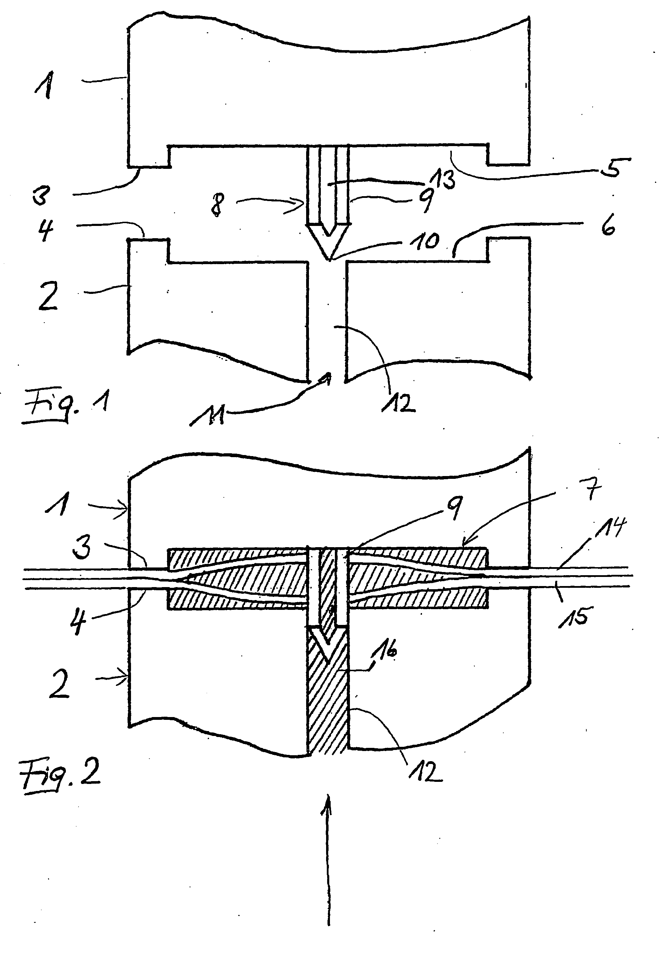

Figur 1 lässt schematisch ein erstes Formteil 1 und ein zweites Formteil 2 erkennen, wobei die beiden Formteile 1, 2 in einem geöffneten Zustand dargestellt sind. Die Formteile sind in der dargestellten Zeichnung in vertikaler Richtung relativ zueinander bewegbar, sodass sie mit Anpressflächen 3, 4 gegeneinander drückbar sind. Zwischen den Anpressflächen 3, 4 weist jedes Formteil eine Ausnehmung 5, 6 auf, die im geschlossenen Zustand der Formteile 1, 2 eine geschlossene Kammer 7 bilden, wie dies Figur 2 zeigt.

Innerhalb der Ausnehmung 5 ist mittig eine Nadelanordnung 8 aus einer Vielzahl von Nadeln 9 vorgesehen, deren Spitzen 10 in Richtung auf das zweite Formteil 2 (also in Richtung der relativen Bewegung der Formteile 1, 2 zueinander) zeigen.

Korrespondierend hierzu weist das zweite Formteil 2 eine Düsenanordnung 11 mit entsprechenden Düsenbohrungen 12 auf, in die die Nadeln 9 im geschlossenen Zustand der Formteile 1, 2 formschlüssig eintauchen können:

Die Nadeln 9 sind mit einem seitlichen Schlitz 13 versehen.

Für die Durchführung einer Verbindung zweier Materiallagen 14, 15 werden die Formteile 1, 2 gegenüber dem teilgeöffneten Zustand in Figur 1 weiter geöffnet, sodass die Materiallagen 14, 15 zwischen die Formteile 1, 2 eingelegt werden können. Dann werden die Formteile 1, 2 durch Bewegung aufeinander zu in einen geschlossenen Zustand verbracht, der in Figur 2 dargestellt ist. In diesem Zustand pressen die Andruckflächen 3, 4 der Formteile 1, 2 die Materiallagen außerhalb der durch die Formteile 1, 2 gebildeten geschlossenen Kammer 7 fest gegeneinander. Innerhalb der Kammer 7 durchstoßen die Nadeln 9 die Materiallagen. Gleichzeitig wird durch die Düsenbohrungen 12 Klebstoff 16 eingepresst. Dieser wird durch die seitlichen, nutartigen Schlitze 13 in den Bereich der Kammer 7 geleitet und gelangt durch die im Bereich der Kammern 7 nicht gegeneinander gepressten Materiallagen 14, 15 in den Zwischenraum zwischen den Materiallagen 14, 15, wodurch diese im Bereich der Kammer 7 etwas voneinander weg gedrückt werden. Aufgrund des durchgehenden Schlitzes 13 füllt sich die Kammer 7 sowohl außerhalb der als auch zwischen den Materiallagen 14, 15 mit Klebstoff 16.

Damit ist der Klebstoffauftrag sowohl zwischen den Materiallagen 14, 15 als auch außerhalb der Materiallagen 14, 15 erfolgt.

Der eingepresste Klebstoff 16 kann nach dem Öffnen der Formteile 1, 2 an Luft aushärten, kann bevorzugt aber auch ein Hot-Melt-Klebstoff sein. Bei der Verwendung eines Hot-Melt-Klebstoffes wird vorzugsweise das Auftragssystem des Klebstoffes, Insbesondere mittels einer Induktionsheizung, auf einer erhöhten Temperatur gehalten.

In einer Vorrichtungsvariante können die Formteile 1, 2 an rotierenden Werkzeugen angeordnet sein, deren Anpressflächen 3, 4 einen unveränderlichen kleinen Spalt zur Durchführung von Materiallagen 14, 15 bilden. Beim Durchführung der Materiallagen 14, 15 durch die rotierenden Formteile 1, 2 perforieren die Nadeln 9 die Materiallagen, während gleichzeitig durch die Düsenbohrungen 12 Klebstoff 16 eingepresst werden kann. In dieser Weise gelingt die Verbindung der Materiallagen 14, 15 auch in einem kontinuierlichen Herstellungsverfahren.

Die Verbindung der Materiallagen kann in bevorzugter Weise zum Verschließen von Verpackungen, insbesondere Säcken nach dem Befüllen verwendet werden. Selbstverständlich lässt sich das erfindungsgemäße Verfahren mit Vorteil auch für die Herstellung von beispielsweise Papiersäcken einsetzen, bei denen aus einer oder mehreren flachliegenden Materiallagen mit Hilfe einer Längsnaht beidseitig offene Schlauchabschnitte gebildet werden, die dann einseitig oder beidseitig mit oder ohne Bildung eines Bodens geschlossen werden.

Die vorliegende Erfindung ist nicht auf die Anwendung bei einer bestimmten Materialart beschränkt, sondern kann mit Vorteil bei allen denkbaren Materialarten, insbesondere bei den eingangs aufgezählten Materialarten, ausgeführt werden.

Es ist ferner erkennbar, dass die vorliegende Erfindung unproblematisch die Verbindung von mehr als zwei Materiallagen 14, 15 in einem einzigen Verfahrensschritt und mit einer unveränderten Vorrichtung ermöglicht, da der Klebstoff 16 beim Einpressen durch die Düsenbohrung 12 über die Nadel 8 in alle Zwischenräume zwischen den verschiedenen Materiallagen 14, 15 ... gepresst wird.

Ferner ist es in einer Variante möglich, den Klebstoff 16 nicht durch Düsenbohrungen 12, sondern durch eine Zuführung zu den Schlitzen 13 der Nadel 9 durch das erste Formteil 1 hindurch vorzunehmen. In diesem Fall können die Düsenbohrungen 12 entfallen.

## Patentansprüche

1. Verfahren zur Herstellung eines Erzeugnisses mit wenigstens zwei flexiblen Materiallagen (14, 15), die mittels einer auf zueinander zeigenden Innenflächen der Materiallagen (14, 15) aufgebrachten Klebstoffschicht miteinander verbunden werden, wobei die Materiallagen (14, 15) gegeneinander gedrückt und dann diskontinuierlich perforiert werden, wobei beim Drücken der Materiallagen (14, 15) gegeneinander eine abgeschlossenen Kammer (7) gebildet wird und wobei gleichzeitig mit dem Perforieren Klebstoff (16) von wenigstens einer Außenseite der Materiallagen (14, 15) in die gebildeten Perforationslöcher gepresst, und dabei der Klebstoff (16) in den Zwischenraum zwischen den Materiallagen (14, 15) geleitet wird, **dadurch gekennzeichnet, dass** die abgeschlossene Kammer (7) um die Materiallagen (14, 15) herum gebildet wird und dass die Kammer (7) sowohl zwischen den Materiallagen (14, 15) als auch außerhalb der Materiallagen (14, 15) durch eine Hohlnadel mit einem seitlichen Auslass oder eine seitlich geschlitzte Nadel (9) mit dem Klebstoff (16) gefüllt wird.

2. Verfahren nach Anspruch 1, **dadurch gekennzeichnet, dass** die Materiallagen (14, 15) mittels eines ersten Formteils (1) und eines zweiten Formteils (2), die relativ zueinander bewegbar sind, aneinander gedrückt werden.

3. Verfahren nach Anspruch 2, **dadurch gekennzeichnet, dass** die Formteile (1, 2) mindestens in der Länge der aufzubringenden Klebstoffschicht ausgebindet und senkrecht zu den Materiallagen (14, 15) gegeneinander bewegbar sind.

4. Verfahren nach Anspruch 2, **dadurch gekennzeichnet, dass** die Formteile (1, 2) an rotierenden Werkzeugen ausgebildet sind, zwischen denen die Materiallagen (14, 15) hindurchgeführt werden.

5. Verfahren nach einem der Ansprüche 1 bis 4 zur Herstellung eines Sackes durch Verschließen einer Einfüllöffnung des Sackes durch Verbindung von im Bereich der Einfüllöffnung einander gegenüber liegenden Materiallagen (14, 15).

6. Verfahren nach Anspruch 5 zur Herstellung eines Sackes unter Verschließen einer durch ein Einfüllventil gebildeten Einfüllöffnung.

7. Verfahren nach einem der Ansprüche 1 bis 6 mit der Bildung einer linienförmigen Klebstoffschicht.

8. Vorrichtung zum Verbinden zwei flexibler Materiallagen (14, 15) mittels einer auf zueinander zeigenden Innenflächen der Materiallagen (14, 15) aufgebrachten Klebstoffschicht (16), mit einem ersten Formteil (1) und einem zweiten Formteil (2) zum Andrücken der Materiallagen (14, 15) aneinander, die relativ zueinander bewegbar sind und im geschlossenen Zustand eine abgeschlossene Kammer (7) bilden, mit einer Nadelanordnung (8) in einem der Formteile (1) zum Durchstoßen der Materiallagen (14, 15) und mit einer Düsenanordnung (11) zum Eindrücken von Klebstoff (16) in die durchstoßenen Bereiche der Materiallagen (14, 15) zum Einleiten von Klebstoff (16) in den Zwischenraum zwischen den Materiallagen (14, 15), **dadurch gekennzeichnet, dass** die durch die Formteile (1, 2) gebildete abgeschlossene Kammer (7) durch die Materiallagen (14, 15) gequert wird, dass die Nadelanordnung (8) durch Hohlnadeln mit einem seitlichen Auslass oder durch seitlich geschlitzte Nadeln (9) gebildet Ist und dass über die Nadelanordnung (8) die Kammer (7) auch außerhalb der beiden Materiallagen (14, 15) mit Klebstoff (16) füllbar ist.

9. Vorrichtung nach Anspruch 8, **dadurch gekennzeichnet, dass** die Düsenanordnung (11) den Klebstoff (16) in Hohlräume der Nadeln (9) drückt, sodass der Klebstoff (16) durch einen seitlichen Auslass austritt.

10. Vorrichtung nach einem der Ansprüche 8 oder 9, **dadurch gekennzeichnet, dass** die Nadelanordnung (8) im ersten Formteil (1) und die Düsenanordnung (11) im zweiten Formteil (2) angeordnet sind und dass die Nadeln (9) der Nadelanordnung (8) in die Düsenbohrungen (12) der Düsenanordnung (11) eintauchen, wenn die Formteile (1, 2) die Materiallagen (14, 15) aneinander drücken.

11. Vorrichtung nach einem der Ansprüche 8 bis 10, **dadurch gekennzeichnet, dass** die Formteile (1, 2) Leisten sind, die wenigstens die Länge der herzustellenden Klebstoffschicht aufweisen und senkrecht zu den Materiallagen (14, 15) gegeneinander verfahrbar sind.

12. Vorrichtung nach einem der Ansprüche 8 bis 10, **dadurch gekennzeichnet, dass** die Formteile (1, 2) an rotierenden Werkzeugen ausgebildet sind, zwischen denen die Materiallagen (14, 15) transportierbar sind.

## Claims

1. Process for manufacturing a product comprising at least two flexible material layers (14, 15) which are connected to each other by means of an adhesive coating applied to mutually facing inner surfaces of the material layers (14, 15), wherein the material layers (14, 15) are pressed together and are then intermittently perforated, wherein, when the material layers (14, 15) are pressed together, a closed-off chamber (7) is formed, and wherein, simultaneously with the perforation, adhesive (16) is injected from at least one outer side of the material layers (14, 15) into the formed perforation holes, whereupon the adhesive (16) is conducted into the interspace between the material layers (14, 15), **characterized in that** the closed-off chamber (7) is formed around the material layers (14, 15) and **in that** the chamber (7) is filled with the adhesive (16) both between the material layers (14, 15) and outside of the material layers (14, 15) by means of a hollow needle having a lateral outlet or a laterally slotted needle (9).

2. Process according to Claim 1 **characterized in that** the material layers (14, 15) are pressed together by means of a first mould (1) and a second mould (2), which moulds are movable relative to each other.

3. Process according to Claim 2, **characterized in that** the moulds (1, 2) are configured in the length of the adhesive coating to be applied and are reciprocally movable perpendicular to the material layers (14, 15).

4. Process according to Claim 2, **characterized in that** the moulds (1, 2) are configured on rotary tools, between which the material layers (14, 15) are passed.

5. Process according to one of Claims 1 to 4 for manufacturing a bag by closing a feed opening of the bag through the connection of material layers (14, 15) lying opposite each other in the region of the feed opening.

6. Process according to Claim 5 for manufacturing a bag, involving the closure of a feed opening formed by a feed valve.

7. Process according to one of Claims 1 to 6, comprising the formation of a linear adhesive coating.

8. Device for connecting two flexible material layers (14, 15) by means of an adhesive coating (16) applied to mutually facing inner surfaces of the material layers (14, 15), said device having a first mould (1) and a second mould (2) for pressing the material layers (14, 15) together, which moulds are movable relative to each other and in the closed state form a closed-off chamber (7), having a needle arrangement (8) in one of the moulds (1) for piercing the material layers (14, 15), and having a nozzle arrangement (11) for forcing adhesive (16) into the pierced regions of the material layers (14, 15) for the introduction of adhesive (16) into the interspace between the material layers (14, 15), **characterized in that** the closed-off chamber (7) formed by the moulds (1, 2) is traversed by the material layers (14, 15), **in that** the needle arrangement (8) is formed by hollow needles having a lateral outlet or by laterally slotted needles (9), and **in that** the chamber (7) can also be filled with adhesive (16) outside of the two material layers (14, 15) by means of the needle arrangement (8).

9. Device according to Claim 8, **characterized in that** the nozzle arrangement (11) forces the adhesive (16) into cavities in the needles (9), such that the adhesive (16) exits through a lateral outlet.

10. Device according to either of Claims 8 and 9, **characterized in that** the needle arrangement (8) is disposed in the first mould (1) and the nozzle arrangement (11) in the second mould (2), and **in that** the needles (9) of the needle arrangement (8) intrude into the nozzle bores (12) of the nozzle arrangement (11) when the moulds (1, 2) press the material layers (14, 15) together.

11. Device according to one of Claims 8 to 10, **characterized in that** the moulds (1, 2) are bars, which have at least the length of the adhesive coating to be manufactured and are reciprocally movable perpendicular to the material layers (14, 15).

12. Device according to one of Claims 8 to 10, **characterized in that** the moulds (1, 2) are configured on rotary tools, between which the material layers (14, 15) can be transported.

## Revendications

1. Procédé pour la fabrication d'un produit comportant au moins deux couches de matériau flexibles (14, 15) qui sont reliées l'une à l'autre au moyen d'une couche de colle appliquée sur des surfaces intérieures mutuellement en vis-à-vis des couches de matériau (14, 15), dans lequel les couches de matériau (14, 15) sont pressées l'une contre l'autre et sont ensuite perforées de façon discontinue, dans lequel lors du pressage des couches de matériau (14, 15) l'une contre l'autre, il se forme une chambre fermée (7), et dans lequel simultanément avec la perforation, une colle (16) est injectée sous pression depuis au moins une face extérieure des couches de matériau (14, 15) dans les trous de perforation formés et la colle (16) est ici amenée dans l'intervalle entre les couches de matériau (14, 15),
**caractérisé en ce que** la chambre fermée (7) est formée tout autour des couches de matériau (14, 15), et **en ce que** la chambre (7) est remplie avec la colle (16) aussi bien entre les couches de matériau (14, 15) qu'à l'extérieur des couches de matériau (14, 15) via une aiguille creuse avec une sortie latérale, ou via une aiguille (9) fendue latéralement.

2. Procédé selon la revendication 1, **caractérisé en ce que** les couches de matériau (14, 15) sont pressées l'une contre l'autre au moyen d'une première partie de moule (1) et d'une seconde partie de moule (2) qui sont déplaçables l'une par rapport à l'autre.

3. Procédé selon la revendication 2, **caractérisé en ce que** les parties de moule (1, 2) sont réalisées au moins dans la longueur de la couche de colle à appliquer et sont déplaçables l'une par rapport à l'autre perpendiculairement aux couches de matériau (14, 15).

4. Procédé selon la revendication 2, **caractérisé en ce que** les parties de moule (1, 2) sont réalisées sur des outils en rotation entre lesquels on fait passer les couches de matériau (14, 15).

5. Procédé selon l'une des revendications 1 à 4 pour la fabrication d'un sac par obturation d'une ouverture de remplissage du sac en collant des couches de matériau (14, 15) situées mutuellement en vis-à-vis dans la région de l'ouverture de remplissage.

6. Procédé selon la revendication 5 pour la fabrication d'un sac par obturation d'une ouverture de remplissage formée par une vanne de remplissage.

7. Procédé selon l'une des revendications 1 à 6 comprenant la formation d'une couche de colle de forme linéaire.

8. Dispositif pour relier deux couches de matériau flexibles (14, 15) au moyen d'une couche de colle (16) appliquée sur des surfaces intérieures mutuellement en vis-à-vis des couches de matériau (14, 15), comprenant une première partie de moule (1) et une seconde partie de moule (2) pour presser les couches de matériau (14, 15) l'une contre l'autre, ces parties étant déplaçables l'une par rapport à l'autre et formant dans la situation fermée une chambre fermée (7), comprenant un agencement à aiguille (8) dans l'une des parties de moule (1) pour traverser les couches de matériau (14, 15), et comprenant un agencement à buse (11) pour injecter de la colle (16) dans les régions traversées des couches de matériau (14, 15) en vue de faire entrer la colle (16) dans l'intervalle entre les couches de matériau (14, 15), **caractérisé en ce que** la chambre fermée (7) formée par les parties de moule (1, 2) est traversée par les couches de matériau (14, 15), **en ce que** l'agencement à aiguille (8) est formé par une aiguille creuse avec une sortie latérale ou par une aiguille (9) fendue latéralement, et **en ce que** la chambre (7) est remplissable également à l'extérieur des deux couches de matériau (14, 15) avec de la colle via l'agencement à aiguille (8).

9. Dispositif selon la revendication 8, **caractérisé en ce que** l'agencement à buse (11) force la colle (16) dans des cavités des aiguilles (9) de telle manière que la colle (16) sort via une sortie latérale.

10. Dispositif selon l'une des revendications 8 ou 9, **caractérisé en ce que** l'agencement à aiguille (8) est agencé dans une première partie de moule (1) et l'agencement à buse (11) est agencé dans la seconde partie de moule (2), et **en ce que** les aiguilles (9) de l'agencement à aiguille (9) plongent dans les perçages de buse (12) de l'agencement à buse (11) quand les parties de moule (1, 2) pressent les couches de matériau (14, 15) l'une contre l'autre.

11. Dispositif selon l'une des revendications 8 à 10, **caractérisé en ce que** les parties de moule (1, 2) sont des barrettes qui ont au moins la longueur de la couche de colle à réaliser et qui sont déplaçables l'une par rapport à l'autre perpendiculairement aux couches de matériau (14, 15).

12. Dispositif selon l'une des revendications 8 à 10, **caractérisé en ce que** les parties de moule (1, 2) sont réalisées sur des outils en rotation, entre lesquels les couches de matériau (14, 15) sont transportables.
